(19) Europäisches Patentamt

European Patent Office

Office européen des brevets

(11) **EP 1 141 615 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(51) Int Cl.[7]: **F16N 7/38**, F16N 29/02

(21) Anmeldenummer: **99963456.1**

(86) Internationale Anmeldenummer:
**PCT/EP1999/009700**

(22) Anmeldetag: **09.12.1999**

(87) Internationale Veröffentlichungsnummer:
**WO 2000/036331 (22.06.2000 Gazette 2000/25)**

(54) **VERFAHREN ZUR SCHMIERUNG VON TRANSPORTSYSTEMEN ODER TEILEN DAVON SOWIE DIE VERWENDUNG EINER SCHMIERMITTELVORRICHTUNG ZUR DURCHFÜHRUNG DES VERFAHRENS UND EIN ZUGEHÖRIGES TRANSPORTSYSTEM MIT ENTSPRECHENDER SCHMIERMITTELEINRICHTUNG**

METHOD FOR LUBRICATING TRANSPORT SYSTEMS OR PARTS THEREOF, THE USE OF A LUBRICATING DEVICE FOR CARRYING OUT THE METHOD, AND AN APPROPRIATE TRANSPORT SYSTEM WITH A CORRESPONDING LUBRICATING DEVICE

PROCEDE POUR LA LUBRIFICATION DE SYSTEMES DE TRANSPORT OU DE PARTIES DE SYSTEMES DE TRANSPORT, UTILISATION D'UN DISPOSITIF LUBRIFIANT POUR L'EXECUTION DU PROCEDE ET SYSTEME DE TRANSPORT ASSOCIE A DISPOSITIF LUBRIFIANT CORRESPONDANT

(84) Benannte Vertragsstaaten:
**DE FR**

(30) Priorität: **13.12.1998 DE 19857289**

(43) Veröffentlichungstag der Anmeldung:
**10.10.2001 Patentblatt 2001/41**

(73) Patentinhaber: **Brückner Maschinenbau GmbH**
**83313 Siegsdorf (DE)**

(72) Erfinder:
• **LINDNER, Paul**
**A-5302 Henndorf (AT)**
• **RÜHLEMANN, Ulrich**
**D-83355 Grabenstätt (DE)**

• **GUMPINGER, Helmut**
**D-83454 Anger (DE)**

(74) Vertreter: **Flach, Dieter Dipl.-Phys. et al**
**Andrae Flach Haug**
**Adlzreiterstrasse 11**
**83022 Rosenheim (DE)**

(56) Entgegenhaltungen:
**EP-A- 0 419 835**     **EP-A- 0 806 603**
**EP-A- 0 926 426**     **FR-A- 845 568**
**FR-A- 2 344 476**     **GB-A- 2 021 703**
**US-A- 4 011 927**     **US-A- 5 381 874**
**US-A- 5 769 182**

EP 1 141 615 B1

## Beschreibung

Die Erfindung betrifft ein Verfahren zur Schmierung von Führungsbahnen einer Reckanlage gemäß dem Oberbegriff des Anspruches 1 und die Verwendung einer Schmiermittelvorrichtung zur Durchführung des Verfahrens sowie ein zugehöriges Transportsystem mit entsprechender Schmiermittelvorrichtung.

Es sind bereits Schmiervorrichtungen bekannt geworden, bei denen beispielsweise die Laufflächen in Transportsystemen durch Tropfschmierung oder Ölnebelschmierung erfolgen soll. Bei der Tropfschmierung beispielsweise erfolgt die Zuführung von Schmieröl an den gleitend oder rollend gegeneinander bewegten Maschinenteilen über Vorrichtungen, die eine genaue Bemessung der Ölmenge pro Schmierstelle erlauben. Dabei wird das Öl über einen Druckerzeuger oder über die Schmierstellen gesetzte Behälter, Öltropfapparate u.dgl. an die zu schmierenden Stellen herangeführt. Die Mengenverteilung erfolgt dabei über Zumeßventile oder Dosierelemente, wobei bei jedem Arbeitshub ein bestimmtes Volumen gefördert wird. Die einzelnen Arbeitshübe sind dabei durch Pausenzeiten voneinander getrennt, in denen kein Öl gefördert wird.

Eine entsprechend elektrisch steuerbare automatische Schmiermittelvorrichtung ist beispielsweise aus der US 5 634 531 bekannt geworden. Ein Kolben wird über eine elektrisch angesteuerte Gewindespindel vorwärts bewegt und das in einem Druckraum befindliche fließfähige Schmiermittel über eine Austrittsöffnung abgegeben. Der elektrische Motor zur Druckmittelzuführung ist dabei an einem Steuerungskreis angeschlossen, der zum Antrieb des Motors im vorstehend genannten Sinne periodisch angesteuert wird, um eine nächste Dosiermenge an Schmiermittel zuzufördern.

Bei einer aus der DD 148 356 bekannten Zentralschmiervorrichtung für Spannketten ist vorgesehen, dass über einen Motor eine Kolbenpumpe angetrieben wird, worüber über eine Saugleitung Schmiermittel aus einem Behälter angesaugt und über Abgänge der Kolbenpumpe, vorzugsweise 6 bis 12 Abgänge für 6 bis 12 Schmierstellen, das Schmiermittel den entsprechenden Schmierstellen zugeführt wird, und zwar über Tropfenanzeiger. Jeder Tropfenanzeiger ist dabei einer entsprechenden Schmierstelle zugeordnet oder spritzt das Schmieröl pro Hub der Kolbenpumpe an die jeweils zugeordnete Schmierstelle, d.h. eine Gleitfläche oder ein Gelenkbolzen. Die Drehzahl der Kolbenpumpe und somit die Anzahl der Hübe pro Minute kann fest über Getriebe oder Kupplung installiert werden.

Eine Schmiermittelvorrichtung für Laufflächen von in Führungsbahnen bewegten Rollen ist grundsätzlich auch aus der DE 2 254 729 A bekannt geworden. Dazu wird ein endlos umlaufender, und mit einer saugfähigen Außenschicht behafteter Riemen verwendet, der beispielsweise um zwei axial zueinander versetzt liegende Rollen umläuft. Auf dem Riemen bzw. dessen Außenschicht wird über Zuführ- oder Zumesselemente ein Schmiermittel aufgetragen. Das Aufbringen des Schmiermittels erfolgt durch einen Arbeitszylinder. Mittels eines entsprechenden Druckaufbaus in einem Arbeitszylinder wird der Träger und der umlaufende Riemen zyklisch gegen die Rollen geschwenkt.

Abgesehen von dem dadurch bedingten zyklischen Auftragen des Schmiermittels handelt es sich hierbei um eine indirekt arbeitende Schmiervorrichtung, da das Schmiermittel nicht direkt der Führungsbahn einer Schiene zugeführt wird oder zugeführt werden kann. Vielmehr muss zunächst das Auftragen des Schmiermittels auf einen umlaufenden Riemen erfolgen, wobei nachfolgend über die Wechselwirkung mit den Laufflächen der unter dem Riemen hindurchlaufenden Rollen erst in einem zweiten Schritt das Schmiermittel auf die Führungsbahn übertragen werden kann. Durch die zyklisch gegen die Rollen schwenkbare mit dem umlaufenden Riemen versehene Trägereinrichtung wird zudem keine kontinuierliche Schmierung verwirklicht. Schließlich ist eine derartige Schmiermitteleinrichtung bei Führungsbahnen in Reckanlagen nicht einsetzbar, wenn die mit entsprechenden Rollen versehenen Kluppen über den Bereich der Rollen überstehende Aufbauten aufweisen.

Demgegenüber ist es Aufgabe der vorliegenden Erfindung, ein verbessertes Verfahren zur direkten Schmierung von Führungsbahnen in Reckanlagen sowie die Verwendung einer entsprechend geeigneten Schmiermittel-Vorrichtung zu schaffen, wodurch gewährleistet sein soll, dass eine weitere Reduzierung des Schmiermittelverbrauchs ermöglicht wird.

Die Aufgabe wird erfindungsgemäß bezüglich des Verfahrens entsprechend den im Anspruch 1, bezüglich der Verwendung einer Schmiermittelvorrichtung gemäß den im Anspruch 7 und bezüglich des Transportsystems entsprechend den im Anspruch 9 angegebenen Merkmalen gelöst. Vorteilhafte Ausgestaltungen der Erfindung sind in den Unteransprüchen angegeben.

Bei allen aus dem Stand der Technik bekannten Verfahren hat sich aber nunmehr gezeigt, dass - soweit die Zuführung eines Schmiermittels beispielsweise durch Bohrungen in einer Führungsschiene einer Reckanlage erfolgen soll - die dadurch austretenden erzeugten Schmiermitteltropfen eine gewisse Mindestgröße aufweisen. Sobald ein zu schmierendes mit dem Öltropfen in Kontakt kommendes Teil über dieses Schmiermittel hinweg bewegt wird, im Falle einer Reckanlage beispielsweise eine Laufrolle oder ein Gleitelement, wird ein Großteil des Tropfenvolumens seitlich verdrängt bzw. abgeschleudert und kann somit nicht mehr zur Wirkung kommen. Die derzeitige technische Grenze bei der Dosierung liegt bei 10 mm$^3$ pro Dosierstelle. Kleinere Mengen können in dieser Form derzeit nicht dosiert werden. Denn die bisher besten Schmiermittelsysteme arbeiten mit einer pneumatischen Förderung in einem mit vergleichsweise großem zeitlichen Abstand gepulsten Betrieb, wobei die Pulsierung notwendig erscheint, um einen Mindestdruck zu überschreiten, um überhaupt einen kleinsten Schmiermitteltropfen abzugeben. Würde der Druck bei der Pulsierung noch weiter gesenkt werden, so würde in dem Schmiermittel-Kanalsystem durch innere Reibungswerte der Druck soweit abgebaut werden, dass an den Schmiermittelöffnungen kein Tropfen mehr abgegeben wird.

Demgegenüber schlägt die Erfindung eine kontinuierliche Schmiermittelförderung und -zufuhr vor, d.h. unter deutlicher Verringerung der beim Stand der Technik vorgesehenen Pausenzeiten oder sogar unter völliger Vermeidung von getakteten Pausenzeiten. Erfindungsgemäß ist dann eine kurze Unterbrechung der Schmiermittelzufuhr nur noch dann notwendig, wenn ein Schmiermittel-Druckraum unter Verwendung einer entsprechenden Schmiervorrichtung völlig entleert wurde, und der oder die Kolben kurzfristig zurückgefahren und der Behälter erneut aufgefüllt werden muss.

Die erfindungsgemäße kontinuierliche Schmiermittelförderung zeichnet sich in einer bevorzugten Ausführungsform der Erfindung vor allem auch dadurch aus, dass die kontinuierliche Führung gleichwohl direkt durchgeführt wird, dass also keine zusätzlichen, die Schmierung letztlich bewirkenden Übertragungssysteme notwendig sind, wie sie beispielsweise in der DE 22 54 729 B2 als notwendig beschrieben werden.

Der ganz grundsätzliche und wesentliche Unterschied des erfindungsgemäßen Verfahrens zum Stand der Technik ergibt sich bereits daraus, dass beispielsweise der Quotient aus der schmieraktiven Zeit zur Pausen- oder Nachladezeit eines mit Schmiermittel befüllten und nach dessen Entleerung erneut befüllbaren Schmiermittelvolumens im Stand der Technik einen Betrag X = 0,25 betragen kann, wobei bei der erfindungsgemäßen Schmierung diese Zahl beispielsweise nicht nur um den Faktor 10, 100 oder 1000, sondern beispielsweise sogar um 5000 mal und mehr größer sein kann.

Durch dieses erfindungsgemäße Verfahren werden deutliche Vorteile gegenüber bisherigen Verfahren realisiert. Zum einen ergibt sich eine drastische Reduzierung des Schmiermittelverbrauchs. Bedenkt man dabei ferner, dass bei vielen Anlagen, insbesondere auch bei Folienreckanlagen, sehr teure temperaturbeständige Spezial-Öle verwendet werden müssen, so wird der Einsparungseffekt in finanzieller Hinsicht unmittelbar ersichtlich. Andererseits hat aber die Reduzierung des Schmiermittelverbrauchs den ganz grundsätzlichen weiteren Vorteil zur Folge, dass dadurch weniger Verunreinigungen und Beeinträchtigungen durch weggeschleuderte Schmiermittelpartikel auftreten können, somit also die Güte und Reinheit des herzustellenden Produktes deutlich verbessert wird. Auch dies hat gerade bei der Kunststoffolienherstellung eine große Bedeutung.

Nur der Vollständigkeit halber wird auch erwähnt, dass die im Stand der Technik grundsätzlich bekannte Sprühschmierung insoweit zu keiner Verbesserung führt, da das Schmiermittel auch in diesem Falle nicht exakt auf die Schmierstelle aufgebracht wird, dadurch ebenfalls Schmiermittel vergeudet wird und zudem insbesondere auch wiederum bei der Kunststoffolienherstellung die Kunststoffolie durch den in der Luft fein verteilten Nebel des austretenden Schmiermittels die Kunststoffolie stark verschmutzt wird.

Zur Durchführung des Verfahrens wird eine Vorrichtung vorgeschlagen, die sich insbesondere für einen kontinuierlichen Schmiermittelaustrag über lange Zeit eignet.

Die Erfindung wird nachfolgend anhand von Zeichnungen näher dargestellt. Dabei zeigen im einzelnen:

Figur 1 : einen schematischen Querschnitt durch eine zu schmierende Schiene, wie sie in einer Folienreckanlage einsetzbar ist;

Figur 2 : eine schematische perspektivische Darstellung einer Schmiermittelvorrichtung;

Figur 3 : ein Diagramm zur Verdeutlichung der Funktionsweise des erfindungsgemäßen Schmiermittelverfahrens zu einem nach dem Stand der Technik bekannten Verfahren; und

Figur 4 : ein weiteres Diagramm bezüglich eines abgewandelten Ausführungsbeispieles.

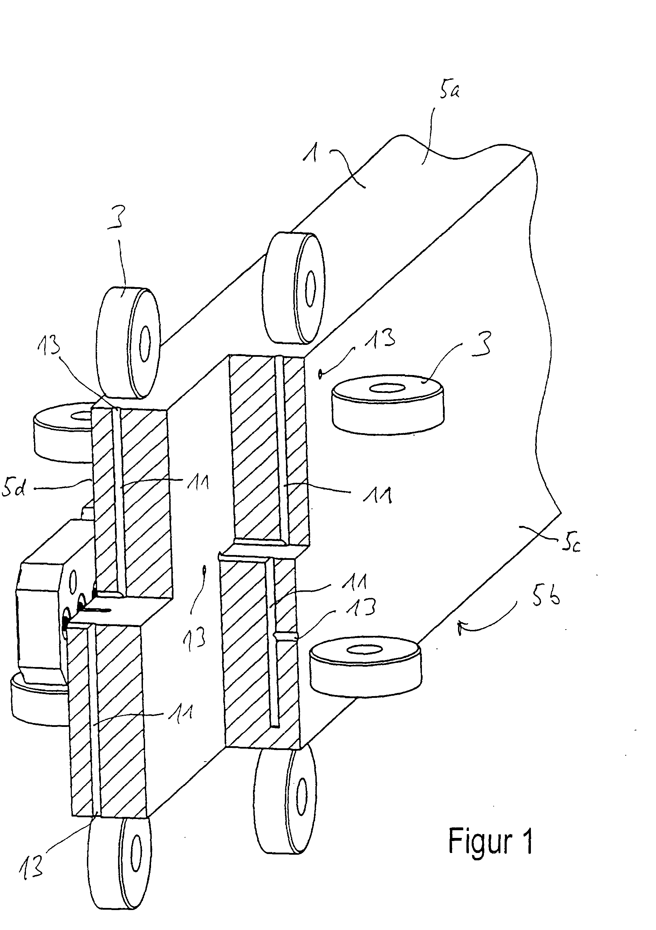

In Figur 1 ist in schematischem Querschnitt eine Führungsschiene 1 gezeigt, auf welcher ein nur ansatzweise angedeuteter Kluppenwagen längs verfahrbar ist. Von dem Kluppenwagen sind nur zur schematischen Verdeutlichung mehrere Paare von Laufrädern 3 gezeigt, die beispielsweise einmal auf der obenliegenden Lauffläche 5a, der gegenüberliegenden unteren Lauffläche 5b, der in Figur 1 rechtsliegenden Lauffläche 5c und der gegenüberliegenden Lauffläche 5d abrollen. Es handelt sich bei dem Ausführungsbeispiel also um eine sog. Mono-Rail, wobei die Laufräder 3 die jeweils paarweise gegenüberliegenden Laufflächen 5a bis 5d übergreifen und darauf ablaufen. Ein entsprechender Kluppenwagen und eine entsprechende Antriebsanordnung ist beispielsweise aus der Vorveröffentlichung DE 195 15 036 A1 bekannt. Derartige Führungsschienen 1 werden beispielsweise bei der Herstellung von Kunststoffolien in sequentiellen Reckanlagen (unter Durchführung eines Querreckschrittes und eines nachfolgenden Längsreckschrittes oder umgekehrt) oder aber auch bei Simultan-Reckanlagen unter gleichzeitiger Reckung einer Kunststoffolie in Längs- und Querrichtung verwendet. Als Führungselemente für den Kluppenwagen können Rollen wie auch Gleitelemente dienen.

In der schematischen Querschnittsdarstellung sind beispielsweise im Schienenkörper vorgesehene Schmiermittelbohrungen oder -kanäle 11 gezeigt, worüber das Schmiermittel zu Austrittsöffnungen 13 an den zu schmierenden Schienenlaufflächen 5a bis 5d gefördert wird. Die an den einzelnen Schienenlaufflächen vorgesehenen Austrittsöffnungen 13 sind in entsprechender Höhe und in entsprechenden Abständen zueinander angeordnet, um eine ausreichende Schmierung zu erzielen. In Figur 1 sind nur einige dieser Austrittsöffnungen gezeigt.

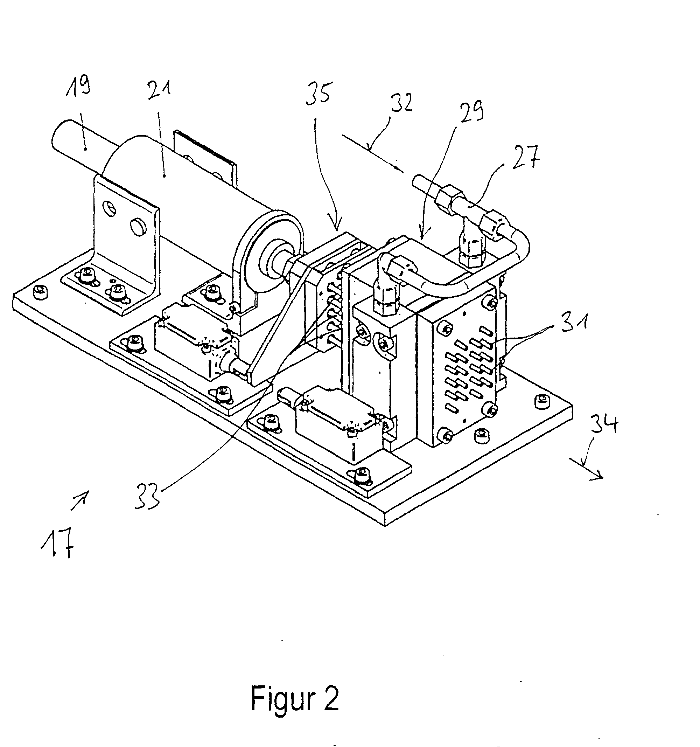

Das Schmiermittel wird beispielsweise über eine in Figur 2 schematisch wiedergegebene Schmiermittel-Vorrichtung 17 zugeführt, welche eine Antriebseinrichtung vorzugsweise in Form eines Elektromotors 19 und eine Verstelleinheit 21, vorzugsweise in Form eines hochübersetzenden Getriebes, umfasst. Durch den Motor und die Verstelleinheit 21 mit einer Lineareinheit, beispielsweise in Form eines Spindelhubelementes, werden ein oder mehrere Kolben kontinuierlich vorwärts bewegt, wodurch Schmiermittel oder Öl aus dem oder den zugehörigen Zylindern herausgedrückt wird. In Figur 2 ist schematisch eine zu einem nicht näher gezeigten Schmiermitteltank führende Ansaugleitung 27 dargestellt, die zu einer Zylinder-Verteileinrichtung 29 führt, an der eine Vielzahl von Austrittsleitungen 31 vorgesehen ist. Längs der Pfeildarstellung 32 erfolgt die Ansaugung des Schmiermittels.

Im Inneren der Zylinder-Verteileinrichtung 29 befindet sich eine der Zahl der Austrittsleitungen 31 entsprechende Anzahl von Kolben 33, die bei dem Ausführungsbeispiel gemäß Figur 2 alle mit einer über den Motor und die Getriebeeinheit in Verbindung stehende, langsam vorwärtsbewegbare Kolbenplatte 35 in Verbindung stehen und darüber angetrieben werden. Durch langsame Vorschubbewegung der Kolbenplatte 35 werden in.die Kolben 33 in entsprechenden sich in der Zylinder-Verteileinrichtung 29 befindenden Zylindern oder Bohrungen (wodurch die Zylinder gebildet werden) langsam vorbewegt, so dass eine dem Zylindervolumen entsprechende Schmiermittelmenge während des kontinuierlichen Antriebs langsam aus den Austrittsleitungen 31 herausgefördert und gemäß Pfeildarstellung 34 über die nicht näher dargestellten Zuführleitungen zu den mehreren in Figur 1 dargestellten Austrittsöffnungen 13 gefördert wird.

Der Motor wird dabei kontinuierlich angetrieben, um ein kontinuierliches Fördern des Schmiermittels zu erreichen. Der Schmierfilm wird während der gesamten Hubzeit des oder der Kolben nicht unterbrochen, um die kontinuierliche Förderung zu bewerkstelligen. Die Förderung des Schmiermittels wird nur unterbrochen durch das Nachladen der nach Art einer Zentraleinheit gebildeten Zylinder-Verteileinrichtung 29.

Der Aufbau kann derart sein, dass sich beispielsweise die nachfolgend wiedergegebenen Schmiermittelmengen pro Monat entsprechend den angegebenen Dosierstellen kontinuierlich mit Schmiermitteln versorgen lassen, wobei zudem die Zeiten angegeben sind, wann ein Nachladen der Zentraleinheit mit Schmiermitteln wieder erforderlich wird.

| Menge in Liter pro Monat | Anzahl der Dosierstellen | Dauer, nach der ein erstes Nachladen erforderlich wird |
|---|---|---|
| 4,0 | 20 | 2,1 Std. |
| 2,0 | 20 | 4,25 Std. |
| 1,0 | 20 | 8,5 Std. |
| 0,5 | 20 | 17 Std. |
| 0,25 | 20 | 34 Std. |

Bereits aus der vorstehend genannten Tabelle ist ersichtlich, dass sich die Sauberkeit des gesamten Systems deutlich erhöhen lässt, weil sich die Öl- oder Schmiermittelmenge gegenüber herkömmlichen Lösungen deutlich reduzieren lässt, wenn nur noch so viel Schmiermittel oder Öl angeboten wird, wie zu jedem Zeitpunkt tatsächlich verbraucht wird.

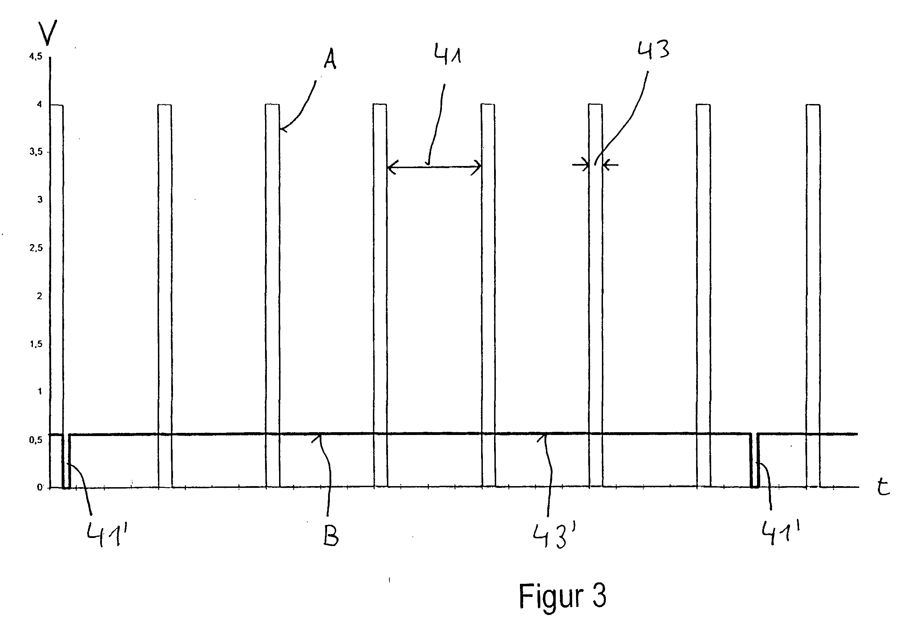

.Das Diagramm gemäß Figur 3 verdeutlicht die Unterschiede des erfindungsgemäßen kontinuierlichen Austrags verglichen mit dem Stand der Technik. In dem Diagramm gemäß Figur 3 ist auf der Horizontalachse die Zeit t und auf der Y-Achse der relative Verbrauch V pro Zeiteinheit dargestellt. Die Kurve A stellt dabei den Schmiermittelverbrauch und die zeitabhängige Dosierung des Schmiermittels bei einer nach dem Stand der Technik bekannten Lösung dar, wohingehend die Kurve B die erfindungsgemäße Lösung mit einem kontinuierlichen Schmiermittel-Austrag wiedergibt.

Während beim Stand der Technik unter Einhaltung von vergleichsweise langen Pausenzeiten 41 jeweils die Schmiermittel-Fördereinrichtung (beispielsweise durch Antrieb eines Elektromotors) nur für eine vergleichsweise kurze Förderzeit 43 zugeschaltet wurde, um einen Schmiermitteltropfen zu erzeugen und abzugeben, zeigt die erfindungsgemäß wiedergegebene Schmiermittelkurve B, dass die Schmiermittelabgabe kontinuierlich über die Zeit erfolgt, die Förderzeit 43' also einen großen kontinuierlichen Zeitraum darstellt und die Pausenzeit 41' nur einmal kurzzeitig insoweit notwendig ist, als nach Entleerung eines Schmiermitteldruckraums ein kurzzeitiges Nachfüllen erforderlich ist.

Die anhand des Diagramms nach Figur 3 sich ergebenden Verhältnisse können auch durch die nachfolgenden Überlegungen verdeutlicht werden.

Als Unterscheidungsmerkmal dient dazu die Kennzeichnung "Schmierfilmkontinuität", die wie folgt definiert ist:

$$Schmierfilmkontinuität \ X = \frac{Schmieraktive \ Zeit}{Schmierinaktive \ Zeit}$$

Die schmierinaktive Zeit stellt also die gesamte Pausenzeit dar, innerhalb derer keine Schmierung erfolgt. Sie umfasst grundsätzlich die Pausezeiten 41 zwischen zwei Schmier-Impulsen sowie die gegebenenfalls noch in größeren zeitlichen Abständen benötigten Pausenzeiten zur Nachfüllung eines Schmiermitteltanks. Bei der erfindungsgemäßen Lösung gemäß Kurve B besteht die schmierinaktive Zeit nur aus der Pausenzeit 41', die in größeren zeitlichen Abständen zur Nachfüllung der Schmiermittelfördereinrichtung benötigt werden, also bei der Fördereinrichtung gemäß Figur 2 zur Rückführung der Kolbeneinheit in die Ausgangsstellung unter Ansaugung von neuem Schmiermittel.

Bei einer Fördermenge von beispielsweise 0,5 1 pro Monat verteilt auf 20 Dosierstellen heißt dies beispielsweise, dass gemäß der Erfindung die schmieraktive Zeit zwischen zwei in Figur 3 eingezeichneten Nachlade- oder Pausenzeiten 41' beispielsweise 1020 min betragen kann, wobei die Nachlade- und Pausenzeit 41' nur 1 min beträgt. Demgegenüber würde beim Stand der Technik in dem gleichen Zeitraum die schmieraktive Zeit nur 204 min und die Pausenzeit 816 min betragen. Die schmieraktive Zeit ergibt sich danach in dem zu vergleichenden Zeitraum aus der Summe der aktiven Schmierzeiten 43 gemäß Kurve A in Figur 3, wobei die Pausen- oder schmierinaktiven Zeiten aus der Summe der Pausenzeiten 41 gebildet wird. Das Verhältnis aus schmieraktiver Zeit zu Pausenzeit beim Stand der Technik entsprechend den Werten 204 : 816 entspricht dabei dem Verhältnis von beispielsweise 15 sec : 60 sec, also dem Verhältnis zwischen der Zeitspanne für die schmieraktive Zeit 43 zur Länge der Zeiteinheit für die Pausenzeit 41.

Allgemein gesprochen ergeben sich für den Stand der Technik zum einen und für die Erfindung zum anderen für einen Wert X für die Schmierfilmkontinuität folgende Werte:

$$vorbekannt : X = \frac{Schmieraktive \ Zeit}{schmierinaktive \ Zeit} = \frac{204 \ min}{816 \ min} = 0,25$$

$$Erfindung : X = \frac{Schmieraktive \ Zeit}{Schmierinaktive \ Zeit} = \frac{1020 \ min}{1 \ min} = 1020$$

Je höher der Wert X für die Schmierfilmkontinuität ist, desto geringer ist der Anteil der Schmierfilmunterbrechung.

Durch richtige Auswahl der Schmiermenge und Kolbenabmessung sowie Kolbenhub kann der Wert X problemlos auch nicht nur über 1.000, 10.000, 100.000, sondern sogar über 1.000.000, beispielsweise bis auf 2.000.000 gesteigert werden.

Als Unterscheidungsmerkmal zwischen der Erfindung zum Stand der Technik kann aber auch eine Schmierfilmkontinuität Y dienen, die beispielsweise in % angegeben werden kann:

$$Y = \frac{Schmieraktive \ Zeit}{Schmieraktive \ Zeit + Schmierinaktive \ Zeit}$$

Für typische Werte nach dem Stand der Technik ergibt es beispielsweise:

$$Y = \frac{Schmieraktive \ Zeit}{Schmieraktive \ Zeit + Schmierinaktive \ Zeit}$$

$$Y = \frac{204 \, min}{816 \, min + 204 \, min} = 0,2 \Rightarrow 20\%$$

Den gleichen Wert von 20 % erhält man auch, wenn die Zeitdauer für einen schmieraktiven Zeitraum 43 ins Verhältnis gesetzt wird zur inaktiven Zeit 41 plus der schmieraktiven Zeitdauer 43 (nämlich 15 sec / (15 sec + 60 sec) = 20 %).

Bei Anwendung der Erfindung ergeben sich folgende Werte:

$$Y = \frac{Schmieraktive \ Zeit}{Schmieraktive \ Zeit + Schmierinaktive \ Zeit}$$

$$Y = \frac{1020 \text{ min}}{1020 \text{ min} + 1 \text{ min}} = 0{,}999 \Rightarrow 99{,}9 \text{ %}$$

Es zeigt sich also, dass der Wert Y gemäß der Erfindung sich problemlos über 20 %, also problemlos auch über 30 %, 40 %, 50 %, 60 %, 70 % oder sogar 80 % und 90 % steigern lässt. Das Rechenbeispiel zeigt, dass Werte sogar über 99 % bis knapp unter die 100 %-Marke realisierbar sind. Je näher der Wert Y an 100 % liegt, desto geringer ist der Anteil der Zeit, während die Schmierfilmzufuhr unterbrochen ist.

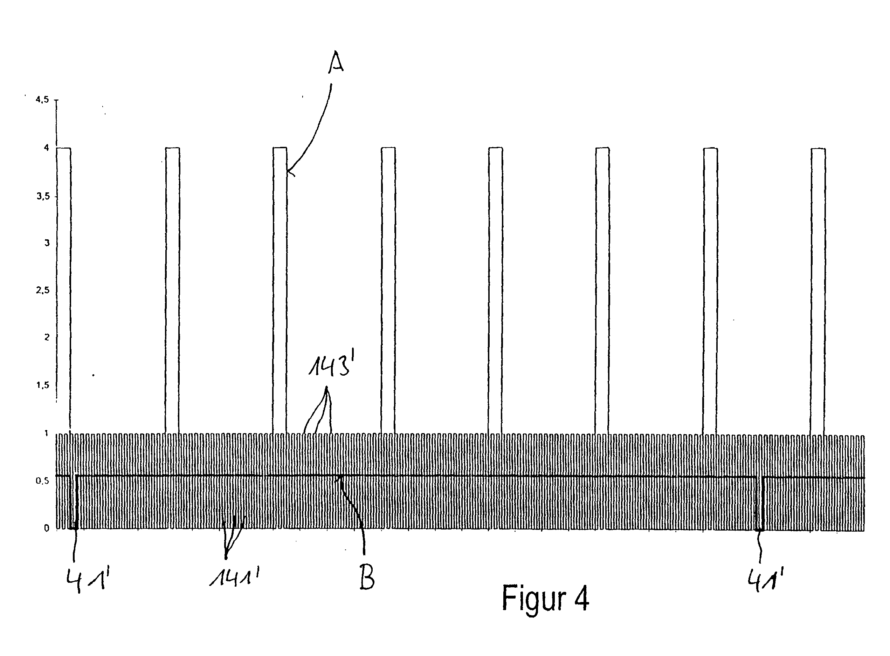

Anhand des Diagramms gemäß Figur 4 wird nur der Vollständigkeit halber gezeigt, dass die erfindungsgemäße Lösung zumindest annähernd auch dadurch realisiert werden kann, wenn in Abweichung zu den Lösungen nach dem Stand der Technik (Kurve A in Figur 4) die Förderzeiten 143' im Verhältnis zu den Pausen- und inaktiven Zeiten 141' deutlich und drastisch dadurch erhöht werden, dass die Schmiermittelzufuhr mit hoher Taktfolge und mit möglichst geringen Pausenzeiten durchgeführt wird. Es handelt sich dabei zumindest um eine quasi-kontinuierliche Schmiermittelzufuhr, auch wenn die Zufuhr getaktet durchgeführt wird, solange jedenfalls aufgrund der gegenüber dem Stand der Technik höheren Frequenz oder Taktfolge die erfindungsgemäßen Vorteile erzielbar sind, insbesondere für niedrige Schmiermittelviskositäten.

**Patentansprüche**

1. Verfahren zur Schmierung von Führungsbahnen einer Reckanlage, bei welcher Schmiermittel mittels einer Schmiermittelvorrichtung (17) einer oder mehreren Schmierstellen zugeführt wird, wobei

$$X = \frac{\text{Schmieraktive Zeit}}{\text{Schmierinaktive Zeit}} \geq 100$$

ist, **dadurch gekennzeichnet, dass** das Schmiermittel über in den Führungsbahnen integrierte Zuführungskanäle zugeführt wird.

2. Verfahren nach Anspruch 1, **dadurch gekennzeichnet, dass** die Schmierfilmkontinuität $X \geq 1.000$, vorzugsweise $\geq 10.000$, $\geq 100.000$, insbesondere $\geq 1.000.000$ ist.

3. Verfahren nach Anspruch 1, **dadurch gekennzeichnet, dass** die Schmierfilmkontinuität

$$Y = \frac{\text{Schmieraktive Zeit}}{\text{Schmieraktive Zeit} + \text{Schmierinaktive Zeit}} \geq 30\%$$

ist.

4. Verfahren nach Anspruch 3, **dadurch gekennzeichnet, dass** die Schmierfilmkontinuität $Y > 40$ %, insbesondere $\geq 50$ %, 60 %, 70 %, 80 %, 90 % ist.

5. Verfahren nach Anspruch 3 oder 4, **dadurch gekennzeichnet, dass** die Schmierfilmkontinuität $Y \geq 95$ %, insbesondere $\geq 96$ %, 97 %, 98 % und vorzugsweise 99 % ist.

6. Verfahren nach einem der Ansprüche 1 bis 5, **dadurch gekennzeichnet, dass** die Schmierung der Schmierstellen direkt dadurch erfolgt, dass das Schmiermittel an Austrittsstellen (13) an die zu schmierenden Stellen abgegeben wird.

7. Verwendung einer Schmiermittelvorrichtung zur Durchführung des Verfahrens nach einem der Ansprüche 1 bis 6, **dadurch gekennzeichnet, dass** die Schmiermittelvorrichtung eine Antriebseinheit, vorzugsweise in Form eines Elektromotors (19), umfasst, welcher eine Verstelleinheit (21) nachgeschaltet ist, worüber ein oder mehrere Kolben (33) zur Erzeugung einer kontinuierlichen oder quasi-kontinuierlichen Schmiermittelzufuhr linear vorbewegbar sind.

8. Verwendung nach Anspruch 7, **dadurch gekennzeichnet, dass** ferner ein hochübersetztes Getriebe vorgesehen ist, welches dem Elektromotor (19) nachgeschaltet ist, um einen kontinuierlichen und langsamen Hub für die Fördereinrichtung zu erzeugen.

**9.** Transportvorrichtung, insbesondere Reckanlage, unter Verwendung einer Schmiermittelvorrichtung gemäß Anspruch 7 oder 8.

**10.** Transportvorrichtung nach Anspruch 9, **dadurch gekennzeichnet, dass** an den zu schmierenden Laufflächen (5a bis 5d) Austrittsöffnungen (13) im Abstand zueinander ausgebildet sind, die mit in der Schiene verlaufenden Schmiermittel-Kanälen (11) in Verbindung stehen, worüber unter Verwendung einer Schmiermittelvorrichtung gemäß Anspruch 7 und 8 Schmiermittel zuführbar ist.

## Claims

**1.** Method of lubricating guideways of a stretching unit, in which lubricant is fed to one or more lubricating points by means of a lubrication arrangement (17), the lubricant film continuity being:

$$X = \frac{\text{Active lubricating time}}{\text{Inactive lubricating time}} \geq 100$$

**characterized in that** the lubricant is fed via feed channels integrated in the guideways.

**2.** Method according to Claim 1, **characterized in that** the lubricant film continuity $X \geq 1,000$, preferably $\geq 10,000$, $\geq 100,000$, in particular $\geq 1,000,000$.

**3.** Method according to Claim 1, **characterized in that** the lubricating film continuity is

$$Y = \frac{\text{Active lubricating time}}{\text{Active lubricating time + inactive lubricating time}} \geq 30\%$$

**4.** Method according to Claim 3, **characterized in that** the lubricating film continuity $Y \geq 40\%$, in particular $\geq 50\%$, 60%, 70%, 80%, 90%.

**5.** Method according to Claim 3 or 4, **characterized in that** the lubricating film continuity $Y \geq 95\%$, in particular $\geq$ 96%, 97%, 98% and preferably 99%.

**6.** Method according to one of Claims 1 to 5, **characterized in that** the lubricating points are lubricated directly by the lubricant being delivered at discharge points (13) to the points to be lubricated.

**7.** Use of a lubrication arrangement for carrying out the method according to one of Claims 1 to 6, **characterized in that** the lubrication arrangement comprises a drive unit, preferably in the form of an electric motor (19), a displacing unit (21) being connected downstream of this drive unit, via which displacing unit (21) one or more pistons (33) can be moved forwards in a linear manner for producing a continuous or virtually continuous lubricant feed.

**8.** Use according to Claim 7, **characterized in that** a high-ratio gear unit is also provided, and is connected downstream of the electric motor (19) in order to produce a continuous and slow stroke for the delivery device.

**9.** Transport arrangement, in particular a stretching unit, using a lubrication arrangement according to Claim 7 or 8.

**10.** Transport arrangement according to Claim 9, **characterized in that** discharge openings (13) are formed at a distance from one another on the running surfaces (5a to 5d) to be lubricated and are connected to lubricant passages (11) running in the rail, via which lubricant passages (11) lubricant can be fed using a lubrication arrangement according to Claim 7 or 8.

## Revendications

**1.** Procédé pour la lubrification des voies de guidage d'une installation d'étirage dans laquelle un lubrifiant est amené au moyen d'un dispositif à lubrifiant (17) à un ou plusieurs points de lubrification, la continuité du film de lubrification

X = temps actif de lubrification / temps inactif de lubrification

étant ≥ 100, **caractérisé en ce que** le lubrifiant est amené via des canaux d'amenée intégrés dans les voies de guidage.

2. Procédé selon la revendication 1, **caractérisé en ce que** la continuité du film de lubrification X est ≥ 1'000, de préférence ≥ 10'000, ≥ 100'000, en particulier ≥ 1'000'000.

3. Procédé selon la revendication 1, **caractérisé en ce que** la continuité du film de lubrification

Y = temps actif de lubrification / (temps actif de lubrification + temps

inactif de lubrification)

est ≥ 30%.

4. Procédé selon la revendication 3, **caractérisé en ce que** la continuité du film de lubrification Y est ≥ 40%, en particulier ≥ 50%, 60%, 70%, 80%, 90%.

5. Procédé selon l'une ou l'autre des revendications 3 ou 4, **caractérisé en ce que** la continuité du film de lubrification Y est ≥ 95%, en particulier ≥ 96%, 97%, 98%, et de préférence 99%.

6. Procédé selon l'une des revendications 1 à 5, **caractérisé en ce que** la lubrification des points de lubrification a lieu directement par le fait que le lubrifiant est distribué aux points à lubrifier au niveau des emplacements de sortie (13).

7. Utilisation d'un dispositif à lubrifiant pour la mise en oeuvre du procédé selon l'une des revendications 1 à 6, **caractérisée en ce que** le dispositif à lubrifiant comprend une unité d'entraînement, de préférence sous la forme d'un électromoteur (19), en aval de laquelle est branchée une unité de déplacement (21) permettant de déplacer linéairement vers l'avant un ou plusieurs pistons (33) pour générer un apport de lubrifiant continu ou quasiment continu.

8. Application selon la revendication 7, **caractérisée en ce qu'**il est prévu en outre une transmission à surmultiplication installée en aval de l'électromoteur (19) afin de générer une course continue et lente pour le dispositif de convoyage.

9. Dispositif de transport, en particulier une installation d'étirage, sous l'utilisation d'un dispositif à lubrifiant selon l'une ou l'autre des revendications 7 et 8.

10. Dispositif de transport selon la revendication 9, **caractérisé en ce que** des ouvertures de sortie (13) sont réalisées à distance les unes des autres sur les surfaces de roulement à lubrifier (5a à 5d) et sont en liaison avec des canaux de lubrifiant (11) s'étendant dans la glissière et permettant d'amener du lubrifiant en utilisant un dispositif à lubrifiant selon l'une ou l'autre des revendications 7 et 8.

Figur 1

Figur 2

Figur 3

EP 1 141 615 B1

Figur 4

EP 1 141 615 B1